# EUROPÄISCHE PATENTANMELDUNG

(11) **EP 1 947 360 A1**
(43) Veröffentlichungstag der Anmeldung: **23.07.2008**
(21) Anmeldenummer: 08000194.4
(22) Anmeldetag: 08.01.2008
(51) Int. Cl.: F16F 9/05, F16F 9/46

(54) **Verstellbares Luftfeder-Dämpfer-Element**

(30) Priorität: 20.01.2007 DE 102007003063
(71) Anmelder: ZF Friedrichshafen AG, 88038 Friedrichshafen (DE); Carl Freudenberg KG, 69465 Weinheim (DE)
(72) Erfinder: Förster, Andreas, 97422 Schweinfurt (DE); Weber, Michael, 21244 Buchholz (DE); Pelz, Peter, Dr., 64285 Darmstadt (DE)

(57) **Zusammenfassung**

Verstellbares Luftfeder-Dämpfer-Element (1), umfassend mindestens zwei voneinander getrennte Arbeitsräume (3,5) in einem Gehäuse (9,15), wobei zwischen zwei Arbeitsräumen (3,5) eine Strömungsverbindung (31) vorliegt, die mit einem verstellbaren Ventil (29) in ihrem Querschnitt beeinflussbar ist, wobei eine Verbindungsstange (21) durch mindestens zwei Arbeitsräume (3,5) des Luftfeder-Dämpfer-Elements (1) verläuft, hohl ausgeführt ist und die Strömungsverbindung (31) zwischen den Arbeitsräumen (3,5) enthält, wobei das verstellbare Ventil (29) an die Strömungsverbindung (31) der hohlen Verbindungsstange (21) angeschlossen ist.

## Beschreibung

Die Erfindung betrifft ein verstellbares Luftfeder-Dämpfer-Element gemäß dem Oberbegriff von Patentanspruch 1.

Aus der DE 34 36 664 C2 ist ein Luftfeder-Dämpfer-Element bekannt, das zwei mit Luft gefüllte Arbeitsräume aufweist. Jeder der Arbeitsräume wird von einem starren Gehäuseabschnitt in Verbindung mit einem Rollbalg begrenzt, wobei der Rollbalg endseitig an einem Abrollkolben fixiert ist. Beide Abrollkolben sind über eine Verbindungsstange mechanisch gekoppelt. An der äußeren Wandung des Gehäuses kann ein erstes Bauteil und an einem Abrollkolben ein zweites Bauteil befestigt werden, wobei eine Relativbewegung zwischen den beiden Bauteilen bedämpft wird. Aufgrund der Differenz der beiden Rollbalgdurchmesser steht eine Tragkraft zur Verfügung.

Beide Arbeitsräume werden durch eine Trennscheibe voneinander getrennt, wobei in der Trennscheibe mindestens eine Drosselöffnung mit konstantem Querschnitt vorliegt. Diese Bauform eines Luftfeder-Dämpfer-Elements zeichnet sich durch ihre Einfachheit und Kompaktheit aus. Ein gravierender Nachteil besteht jedoch darin, dass der Bauraum für den Einbau eines verstellbaren Dämpfventils in die Trennscheibe nicht ausreicht, oder man müsste die Durchmesser der Abrollkolben und der Trennscheibe deutlich vergrößern.

Ein weiterer Lösungsansatz könnte darin gesehen werden, dass man das verstellbare Dämpfventil über Leitungen zu den Arbeitsräumen extern zum Gehäuse anordnet. Bei einer derartigen Variante steigt aber das Leckagerisiko deutlich.

Aus der DE 44 18 120 A1 ist ein Luftfeder-Dämpfer-Element mit drei Arbeitsräumen bekannt. Ein separater Arbeitsraum übernimmt die Tragfunktion. Zwei weitere Arbeitsräume werden von einem Kolben an einer Kolbenstange getrennt. In dem Kolben ist ein verstellbares Dämpfventil angeordnet. Dieses Bauprinzip erfordert einen vergleichsweise langen Kabelstrang zum verstellbaren Dämpfventil durch die hohle Kolbenstange.

Aufgabe der vorliegenden Erfindung ist es ein Luftfeder-Dämpfer-Element dahingehend zu optimieren, dass eine möglichst einfache Anbindung des verstellbaren Dämpfventils erreicht wird.

Erfindungsgemäß wird die Aufgabe dadurch gelöst, dass die Verbindungsstange hohl ausgeführt ist und die Strömungsverbindung zwischen den Arbeitsräumen enthält, wobei das verstellbare Ventil an die Strömungsverbindung der hohlen Verbindungsstange angeschlossen ist.

Der Vorteil der Erfindung besteht darin, dass alle Strömungswege zwischen den Arbeitsräumen innerhalb des Luftfeder-Dämpfer-Elements verlaufen. Externe Anschlüsse sind nicht notwendig. Des Weiteren sind für den Strömungsweg keine zusätzlichen Bauteile erforderlich.

In weiterer vorteilhafter Ausgestaltung wird mindestens einer der Arbeitsräume von einem Rollbalg begrenzt wird, der endseitig an einem stützenden Bauteil des Luftfeder-Dämpferelements befestigt ist, wobei das verstellbare Ventil innerhalb einer der Arbeitsräume angeordnet ist. Das stützende Bauteil kann beispielsweise ein Abrollkolben oder auch ein Deckel der Luftfeder sein.

Im Hinblick auf eine sehr einfache Herstellung der Verbindungsstange ist das verstellbare Dämpfventil endseitig an der Verbindungsstange angeordnet. Man kann von einem einfachen Rohrprofil ausgehen und dieses auf die gewünschte Länge zurichten.

Des Weiteren ist vorgesehen, dass das verstellbare Dämpfventil ein äußeres und ein inneres Gehäuse aufweist, wobei das äußere Gehäuse den Kraftfluss von der Verbindungsstange aufnimmt. Etwaige Biegekräfte, die auf die Verbindungsstange wirken, sollen nicht direkt auf das verstellbare Dämpfventil übertragen werden.

Das äußere Ventilgehäuse weist einen Anschluss an ein Befestigungslager auf und erleichtert mit dem kurzen Abstand zum Befestigungslager wesentlich die Montage, da sich auch die Länge des Kabelstrangs zum verstellbaren Dämpfventil minimiert.

Gemäß einem vorteilhaften Unteranspruch weist das äußere Ventilgehäuse eine Axialanschlagfläche auf, an der das stützende Bauteil befestigt ist. Aufgrund des permanenten Überdrucks im Arbeitsraum fixiert sich das stützende Bauteil, z. B. der Luftfederdeckel, am Ventilgehäuse auch ohne Schrauben.

Das stützende Bauteil des Luftfeder-Dämpfer-Elements wird über einen Hülsenabschnitt zum äußeren Ventilgehäuse radial geführt. Des Weiteren ist zwischen dem äußeren Ventilgehäuse und dem Hülsenabschnitt mindestens eine den Arbeitsraum abdichtende Dichtung angeordnet. Diese Maßnahme vereinfacht die Volumendimensionierung des Arbeitsraums, indem über die Formgebung des zu stützenden Bauteils direkt das Volumen des Arbeitsraums dimensionierbar ist.

Je nach Anwendungsfall für das Luftfeder-Dämpfer-Element kann es sinnvoll sein, wenn für jeweils eine Bewegungsrichtung ein unabhängig verstellbares Dämpfventil in Kombination mit einem Rückschlagventil zur Verfügung steht, wobei das Rückschlagventil eine Bypassöffnung zum anderen Dämpfventil in die Strömungsverbindung der hohlen Verbindungsstange freischaltet.

Anhand der folgenden Figurenbeschreibung soll die Erfindung näher erläutert werden.

Es zeigt:
- Fig. 1- 3: Luftfeder-Dämpfer-Element mit einem verstellbaren Dämpfventil in einem Abrollkolben
- Fig. 4: Luftfeder-Dämpfer-Element mit drei Arbeitsräumen
- Fig. 5: Luftfeder-Dämpfer-Element mit einem verstellbaren Ventil an einem Anschlusslager

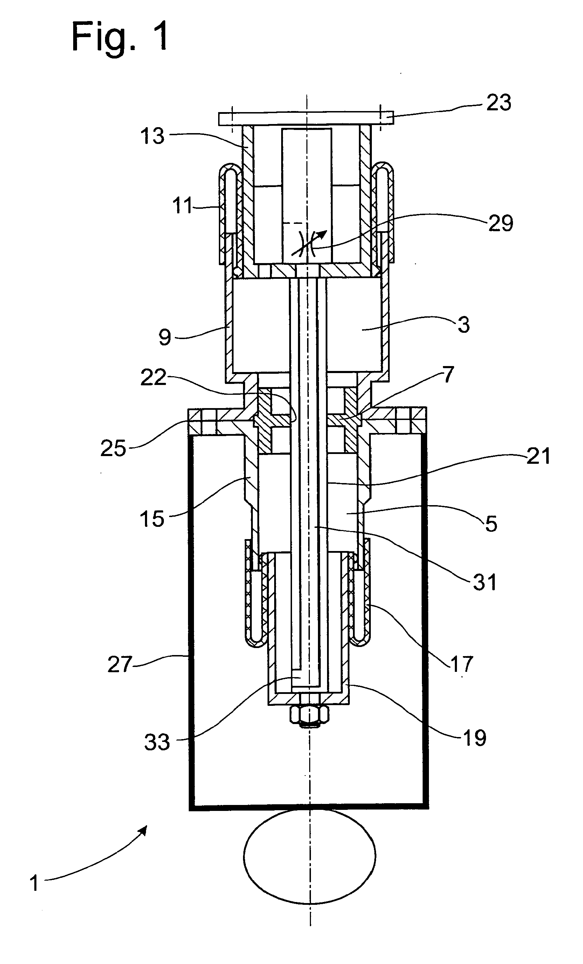

Die Figur 1 zeigt eine erste Ausführungsform eines Luftfeder-Dämpfer-Elements 1, im weiteren nur noch LFD genannt, mit zwei Arbeitsräumen 3; 5. Ein erster Arbeitsraum 3 wird von einem bezogen auf eine Trennscheibe 7 oberen Gehäuseabschnitt 9 und einem daran befestigten Rollbalg 11 begrenzt. Der Rollbalg 11 ist dichtend mit einem ersten Abrollrohr 13 verbunden. Der zweite Arbeitsraum 5 erstreckt sich unterhalb der Trennscheibe 7 und wird von einem unteren Gehäuseabschnitt 15 in Verbindung mit einem Rollbalg 17 und einem zweiten Abrollrohr 19 begrenzt. Beide Abrollrohre 17; 19 sind über eine Verbindungsstange 21 fest miteinander verbunden, wobei die Trennscheibe 7 für die Verbindungsstange 21 eine Durchgangsöffnung aufweist. Ein Deckel 23 des ersten Abrollrohrs 13 ist mit einem nicht dargestellten Fahrzeugaufbau verbunden. Über einen Flansch 25 und eine Halterung 27 greift ein Rad an dem Gehäuse 9; 15 des LFDs an.

In dieser Variante ist innerhalb des Abrollrohrs 13, das funktional als ein das LFD stützende Bauteil anzusehen ist, ein verstellbares Ventil 29 angeordnet. Ein verstellbares Ventil dieser Bauform ist bereits ausführlich in der älteren DE 10 2005 025 978 beschrieben, wobei die konkrete Ausgestaltung des Ventils für die Erfindung nicht von Bedeutung ist. Das verstellbare Ventil 29 ist an eine Strömungsverbindung 31 zwischen den beiden Arbeitsräumen 3; 5 angeschlossen, wobei die Strömungsverbindung 31 von der hohl ausgeführten Verbindungsstange 21 gebildet wird. Wie man weiter der Fig. 1 entnehmen kann, ist das verstellbare Ventil 29 endseitig an der Verbindungsstange 21 angeordnet.

Bei einer Ausfederbewegung der Halterung 27 zum Deckel 23 wird der untere Arbeitsraum 5 komprimiert. Das verdichtete gasförmige Medium innerhalb des Arbeitsraums 5 tritt über mindestens eine radiale Anschlussöffnung 33 in die hohle Verbindungsstange ein und strömt in Richtung des verstellbaren Ventils 29, das den wirksamen Querschnitt der Strömungsverbindung 31 beeinflusst und damit die Dämpfkraft des LFDs bestimmt. Wenn der obere Arbeitsraum 3 bei einer Hubbewegung des Deckels in Richtung der Halterung verkleinert wird, strömt das Dämpfmedium über das verstellbare Ventil 29 in die hohle Verbindungsstange 21 und dann weiter in den unteren Arbeitsraum 5.

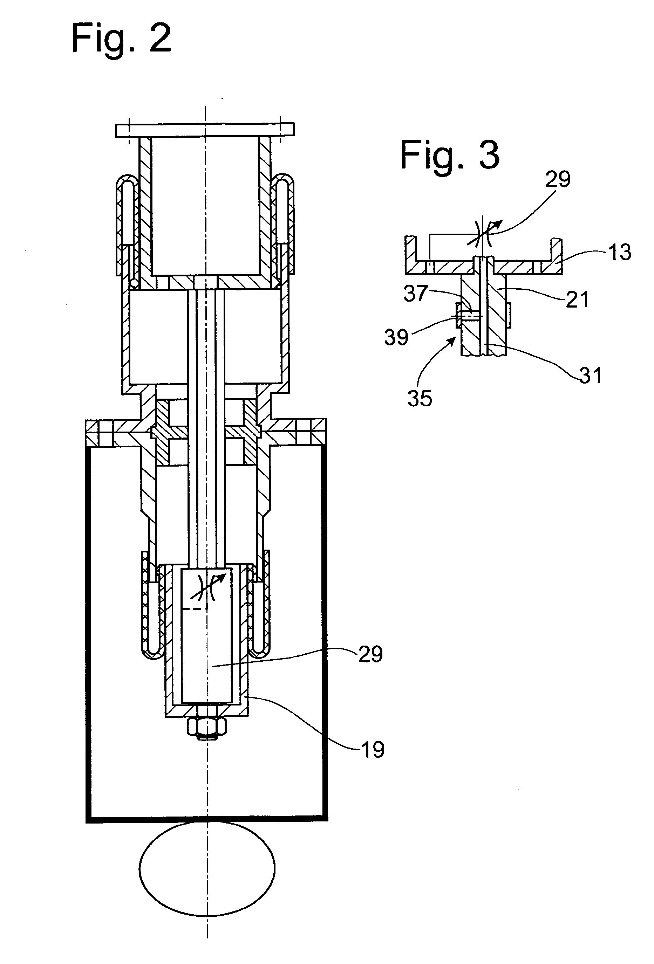

Die Fig. 2 zeigt eine Alternativlösung, bei der das verstellbare Ventil 29 innerhalb des unteren Abrollrohrs 19 angeordnet ist. Die Wirkungsweise ist identisch mit der Ausführung nach Fig. 1. Durch die unterschiedliche Anordnung des verstellbaren Ventils 29 wird indirekt das nutzbare Volumen der Arbeitsräume 3; 5 des LFDs bestimmt, wobei von Fall zu Fall abzuwägen ist, welche Variante für die jeweilige Anwendung vorteilhafter ist.

Man kann auch beide Varianten nach den Fig. 1 und 2 kombinieren und für jeweils eine Bewegungsrichtung ein unabhängig verstellbares Dämpfventil 29 mit einem Rückschlagventil 35 kombinieren, wobei das Rückschlagventil eine Bypassöffnung 37 zu dem verstellbaren Dämpfventil für die andere Bewegungsrichtung freischaltet. Das Rückschlagventil kann z. B. von einem geschlitzten Federring 39 gebildet werden, der sinnvollerweise nahe am verstellbaren Ventil auf der Verbindungsstange angeordnet ist, wie in der Prinzipdarstellung nach Fig. 3 gezeigt ist.

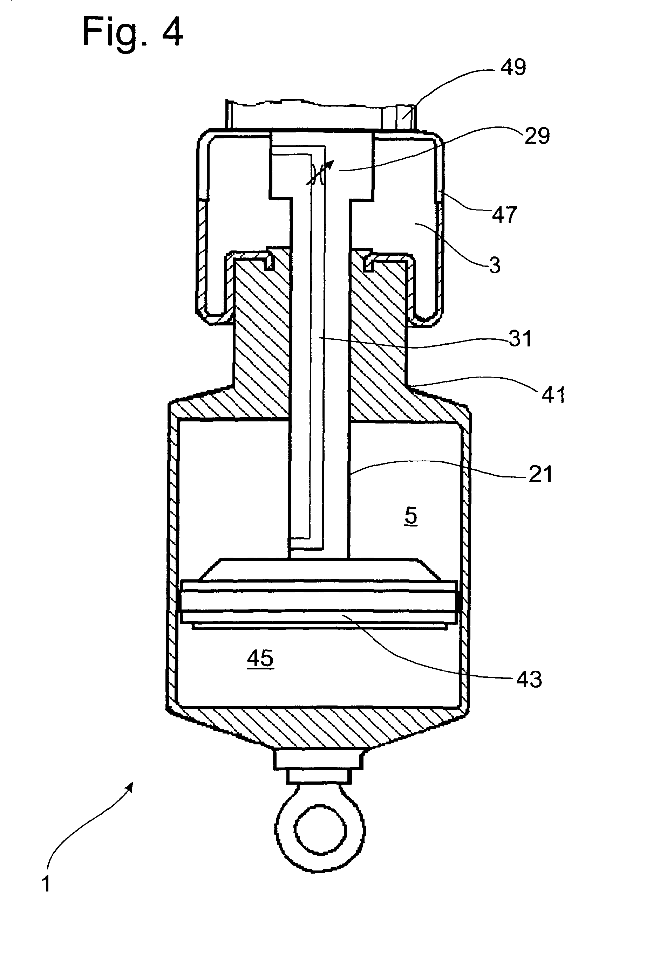

Mit der Fig. 4 soll verdeutlicht werden, dass die Erfindung nicht nur bei einem LFD mit zwei Arbeitsräumen 3; 5 sinnvoll anwendbar ist, sondern auch bei einer Konstruktion mit drei Arbeitsräumen Vorteile bietet. In dem starren Gehäuse 41 ist an der Verbindungsstange 21 ein Trennkolben 43 befestigt, der einen unteren Federraum von einem ersten Dämpfungsraum 45 trennt. Über die Strömungsverbindung 31 in der hohlen Verbindungsstange 21 kann gasförmiges Dämpfmedium in den zweiten Dämpfungsraum 5 strömen, der von einem Rollbalg 47 begrenzt wird. Der Rollbalg 47 ist mit einem ersten Ende am Gehäuse 47 und mit seinem zweiten Ende an einem Deckel 49 befestigt. Die Verbindungsstange 21 steht in Wirkverbindung mit dem Deckel 49, so dass eine Relativbewegung des Deckels 49 zum Gehäuse 41 eine Kompression in einem der Arbeitsräume 3; 5 bewirkt. Symbolisch ist zwischen der hohlen Verbindungsstange 21 und dem Deckel 49 das verstellbare Ventil 29 dargestellt.

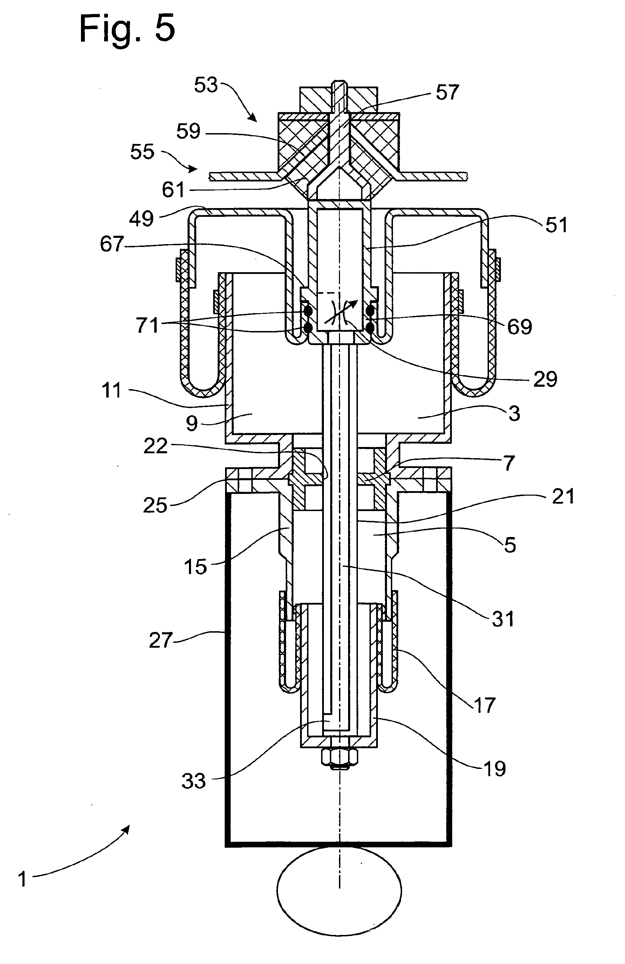

Die Fig. 5 zeigt eine Abwandlung der Fig. 1. Abweichend wird das stützende Bauteil von einem Deckel 49 gebildet, mit dem das verstellbare Ventil 29 innerhalb des Arbeitsraums 3 verbunden ist. Das verstellbare Ventil verfügt über ein äußeres Ventilgehäuse 51, das einerseits direkt an der Verbindungsstange 21 und andererseits an einem Anschluss 53 eines Befestigungslagers 55 ansetzt. Damit wird der Kraftfluss von der Verbindungsstange 21 über das äußere Gehäuse 51 des verstellbaren Ventils 29 auf das Befestigungslager 55 übertragen. Das äußere Ventilgehäuse 51 verfügt über einen schraubbaren Endverschluss 57, der eine konische stirnseitige Kontur 59 aufweist, an dem mindestens ein Elastomerkörper 61 verspannt ist. Der Endverschluss durchgreift eine Anschlussplatte 63, die mit dem Fahrzeugaufbau verschraubbar ist.

Wie man sieht, liegen in dem äußeren Gehäuse 51 Strömungsöffnungen 65 zum nicht dargestellten inneren Ventilgehäuse vor. Das äußere Ventilgehäuse 51 weist einen umlaufenden Steg 67 mit einer Anschlagfläche für das stützende Bauteil, den Deckel 49, auf, so dass der Deckel 49 über seinen Hülsenabschnitt 69 von dem äußeren Ventilgehäuse 51 geführt wird. Dichtungen 71 verhindern eine Leckage des Arbeitsraums 3 an dieser Stelle. Bei der Montage muss der Deckel 49 mit dem Rollbalg 11 lediglich auf das äußere Ventilgehäuse 51 geschoben werden. Die axiale Fixierung erfolgt über den Arbeitsdruck im Arbeitsraum 3.

## Patentansprüche

1. Verstellbares Luftfeder-Dämpfer-Element, umfassend mindestens zwei voneinander getrennte Arbeitsräume, wobei zwischen zwei Arbeitsräumen eine Strömungsverbindung vorliegt, die mit einem verstellbaren Ventil beeinflussbar ist, wobei eine Verbindungsstange durch mindestens zwei Arbeitsräume des Luftfeder-Dämpfer-Elements verläuft,
**dadurch gekennzeichnet,**
**dass** die Verbindungsstange (21) hohl ausgeführt ist und die Strömungsverbindung (31) zwischen den Arbeitsräumen (3;5) enthält, wobei das verstellbare Ventil (29) an die Strömungsverbindung (31) der hohlen Verbindungsstange (21) angeschlossen ist.

2. Verstellbares Luftfeder-Dämpfer-Element nach Anspruch 1,
**dadurch gekennzeichnet,**
**dass** mindestens einer der Arbeitsräume (3; 5) von einem Rollbalg (11; 17) begrenzt wird, der endseitig an einem stützenden Bauteil (13; 19; 49) des Luftfeder-Dämpfer-Elements befestigt ist, wobei das verstellbare Ventil (29) innerhalb einer der Arbeitsräume (3; 5) angeordnet ist.

3. Verstellbares Luftfeder-Dämpfer-Element nach Anspruch 1,
**dadurch gekennzeichnet,**
**dass** das verstellbare Dämpfventil (29) endseitig an der Verbindungsstange (21) angeordnet ist.

4. Verstellbares Luftfeder-Dämpfer-Element nach Anspruch 3,
**dadurch gekennzeichnet,**
**dass** das verstellbare Dämpfventil (29) ein äußeres und ein inneres Ventilgehäuse aufweist, wobei das äußere Ventilgehäuse (51) den Kraftfluss von der Verbindungsstange (21) aufnimmt.

5. Verstellbares Luftfeder-Dämpfer-Element nach Anspruch 4,
**dadurch gekennzeichnet,**
**dass** das äußere Ventilgehäuse (51) einen Anschluss an ein Befestigungslager (55) aufweist.

6. Verstellbares Luftfeder-Dämpfer-Element nach Anspruch 4,
**dadurch gekennzeichnet,**
**dass** das äußere Gehäuse (51) eine Axialanschlagfläche aufweist, an der das stützende Bauteil (49) befestigt ist.

7. Verstellbares Luftfeder-Dämpfer-Element nach Anspruch 6,
**dadurch gekennzeichnet,**
**dass** das stützende Bauteil (49) über seinen Hülsenabschnitt (69) zum äußeren Ventilgehäuse (51) radial geführt wird.

8. Verstellbares Luftfeder-Dämpfer-Element nach Anspruch 7,
**dadurch gekennzeichnet,**
**dass** zwischen dem äußeren Ventilgehäuse (51) und dem Hülsenabschnitt (69) mindestens eine den Arbeitsraum (3) abdichtende Dichtung (71) angeordnet ist.

9. Verstellbares Luftfeder-Dämpfer-Element nach Anspruch 1,
**dadurch gekennzeichnet,**
**dass** für jeweils eine Bewegungsrichtung ein unabhängig verstellbares Dämpfventil (29) in Kombination mit einem Rückschlagventil (35) zur Verfügung steht, wobei das Rückschlagventil (35) eine Bypassöffnung (37) zum anderen Dämpfventil in die Strömungsverbindung (31) der hohlen Verbindungsstange (21) freischaltet.
